# EUROPÄISCHE PATENTSCHRIFT

(11) **EP 1 595 732 B1**
(45) Veröffentlichungstag und Bekanntmachung des Hinweises auf die Patenterteilung: **20.08.2008**
(21) Anmeldenummer: 05005703.3
(22) Anmeldetag: 16.03.2005
(51) Int. Cl.: B60K 5/12

(54) **Vorrichtung zur schwingungsdämpfenden Lagerung**
Device for a vibration damping mounting
Dispositif à montage antivibratoire

(30) Priorität: 14.05.2004 DE 102004024084
(43) Veröffentlichungstag der Anmeldung: 16.11.2005
(73) Patentinhaber: AUDI AG, 85045 Ingolstadt (DE)
(72) Erfinder: Vogel, Friedemann, 85080 Gaimersheim (DE)
(74) Vertreter: Asch, Konrad

(56) Entgegenhaltungen:
- EP-A- 0 480 459
- EP-A- 0 512 195
- WO-A-96/17184
- DE-A1- 3 432 768
- DE-A1- 19 812 837
- DE-A1- 19 961 968

## Beschreibung

Die Erfindung betrifft eine Vorrichtung zur schwingungsdämpfenden Lagerung eines Antriebsaggregates gemäß dem Oberbegriff des Patentanspruches 1.

Derartige schwingungsdämpfende Lager mit Umschaltfunktion zur Anpassung an verschiedene Betriebszustände des Antriebsaggregates sind bekannt. Nur beispielsweise wird auf die DE 199 15 480 C2 oder die DE 102 13 750 A1 verwiesen, die hydraulisch gedämpfte Lager betreffen, die z.B. im Leerlaufzustand des Antriebsaggregates "weicher" geschaltet werden, um aus Komfortgründen Aggregatschwingungen von der Karosserie des Kraftfahrzeuges fernzuhalten. Andererseits soll das Lager mit einer härteren Auslegung Aggregatverlagerungen z.B. durch Antriebseinflüsse entgegenwirken. Die Umschaltung erfolgt durch kompliziert verwirklichbare und fertigungstechnisch aufwändige Drosselsteuerungen innerhalb der Lager.

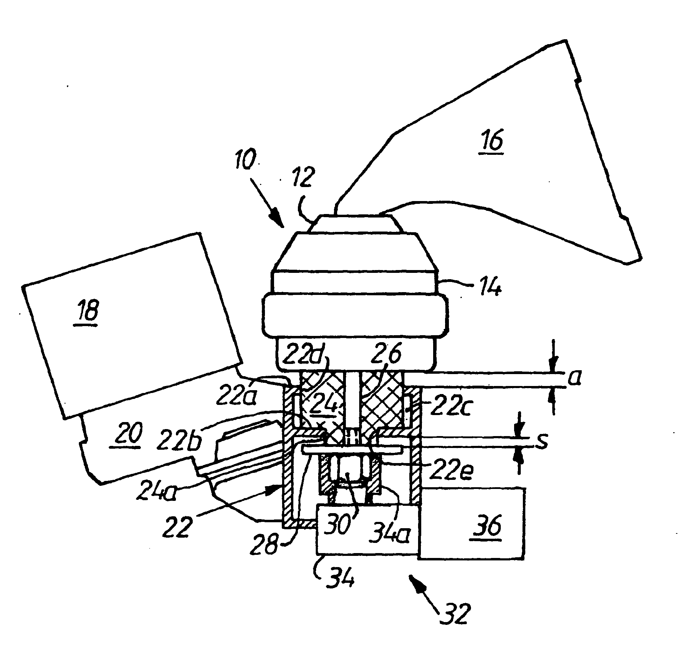

Aus der gattungsbildenden Figur 4 der EP 0 480 459 A1 ist ein Lageraufbau bekannt, bei dem ein Gummikörper einen sogenannten innenliegenden Hohlraum aufweist, der oberhalb einer Halteplatte liegt. Oberhalb dieser Halteplatte ist ferner ein kastenförmiger Stempel angeordnet. Unterhalb der Halteplatte ist eine topfförmige Flanschplatte befestigt, die mittig außenliegend einen Stellmotor trägt, von dem aus ein Gewindebolzen die Flanschplatte und die Halteplatte durchdringt und mit dem Quersteg des kastenförmigen Stempels in Eingriff steht. Beim Einschalten des Stellmotors und Drehen des Gewindebolzens kann somit der Stempel nach unten oder oben verfahren werden, bis die Oberseite zur kraftschlüssigen Anlage an den Gummikörper bzw. die Abstützplatten kommt und in gleicher Weise den Gummikörper so weit streckt, dass der Spalt zwischen überstehendem Rand und eingezogenem Flansch des Gehäuses überbrückt und damit der Gummikörper außer Funktion gebracht wird. Bei einem derartigen Aufbau wird der Gummikörper sehr stark mechanisch beansprucht, was sich ggf. nachteilig auf die Lebensdauer des Lagers auswirken kann.

Weiter ist aus der DE 199 61 968 A1 eine Schwingungsdämpfungsvorrichtung bekannt, bei der eine Steuerung einen Betriebsstrom an einen Elektromagneten liefert, wenn Schüttelschwingungen erzeugt werden. Das bewirkt, dass eine Zwischenplatte an den Elektromagneten angezogen wird, wodurch eine elastische Verformung eines ersten elastischen Teils, die durch eine von der Oberplatte übertragene Belastung verursacht wird, verhindert wird. Deswegen kann die statische Federkonstante eines elastischen Körpers größer gemacht werden, als wenn der Elektromagnet nicht in Betrieb gesetzt würde. Weiter unterbricht die Steuerung die Zufuhr des Betriebsstroms zu dem Elektromagneten, wenn Leerlaufschwingungen erzeugt werden. Das bewirkt wiederum, dass die Zwischenplatte sich von dem Elektromagneten fortbewegt, wodurch eine elastische Verformung des ersten elastischen Teils, die durch die von der Oberplatte übertragene Belastung verursacht wird, ermöglicht wird. Deshalb kann die statische Federkonstante des elastischen Körpers kleiner gemacht werden, als wenn der Elektromagnet in Betrieb gesetzt würde.

Die EP 0 512 195 A1 zeigt ein federratenumschaltbares Motorlager, das aus einem Traglager und einem Auflager besteht, die quer zu einer Achse relativ beweglich angeordnet und durch ein erstes und ein zweites Federelement aus Gummi aufeinander abgestützt sind. Das zweite Federelement ist auch hier entsprechend der EP 0 480 459 A1 durch ein Hilfsmittel bedarfsweise blockierbar, wobei das erste und das zweite Federelement in Serie geschaltet und durch eine formbeständige Stützplatte voneinander getrennt sind.

Demgegenüber ist es Aufgabe der vorliegenden Erfindung, eine alternative Vorrichtung zur schwingungsdämpfenden Lagerung eines Antriebsaggregates, insbesondere in Kraftfahrzeugen, zu schaffen, dessen Dämpfungseigenschaften auf baulich einfache und kompakte Weise an definierte Betriebszustände des Antriebsaggregates angepasst werden können.

Diese Aufgabe wird gelöst mit den Merkmalen des Patentanspruchs 1.

Gemäß Patentanspruch 1 durchdringt der wenigstens eine Verbindungsbolzen die Kammer und ist an dem Gehäuse des Lagers befestigt, wobei der wenigstens eine Verbindungsbolzen zudem so mittels einer am Verbindungsbolzen angreifenden Verstelleinrichtung zusammenwirkt, dass sich das Gehäuse in der Feststellung an einer dem Gehäuse zugeordneten oberen Wand der Aufnahme abstützt und in der Lösestellung aufgrund der Vorspannung des zusätzlichen Dämpfungskörpers von der oberen Wand abhebt.

Ein derartiger erfindungsgemäßer Aufbau ist auf baulich einfache Weise und zudem mit relativ wenig Platzaufwand kompakt realisierbar. Durch das in Reiheschalten des Dämpfungskörpers zum Lager ergibt sich eine insgesamt deutlich weichere Kennlinie. Der Dämpfungskörper kann dabei so ausgebildet sein, dass daraus eine zusätzliche Steifigkeitsabsenkung in allen Raumrichtungen resultiert. Dies stellt zudem sicher, dass in der Lösestellung das Lager bzw. das Aggregat auf dem weicheren Dämpfungskörper frei schwingen kann und dementsprechend zuverlässig jegliche Aggregatschwingungen isoliert bzw. von der Karosserie des Kraftfahrzeuges fernhält.

D. h., dass in der Feststellung die Kennlinienauslegung des Lagers wirksam, in der Lösestellung dagegen eine Kombination beider Kennlinien, nämlich der Kennlinie des Lagers und der Kennlinie des Dämpfungskörpers, wirksam ist, wobei durch die Reihenschaltung das Lagers mit dem Dämpfungskörper insgesamt eine weichere Kennlinie entsteht.

Bevorzugt kann die Verstelleinrichtung zwischen der basisseitigen Konsole und dem Gehäuse des schwingungsdämpfenden Lagers vorgesehen sein, wodurch die Verstelleinrichtung basisseitig angebaut und dementsprechend einfacher ansteuerbar ist und wobei der zusätzliche Dämpfungskörper mit dem Gehäuse des Lagers unmittelbar zusammen wirkt.

Baulich besonders günstig kann die Aufnahme an der basisseitigen Konsole befestigt sein und eine Kammer mit einer oberen Wand und einer unteren Wand aufweisen, wobei in der Kammer der Dämpfungskörper angeordnet ist und ferner wenigstens ein Verbindungsbolzen des Lagers die beiden Wände durchdringt, wobei zudem die Verstelleinrichtung an dem wenigstens Verbindungsbolzen angreift. Bevorzugt ist dabei ein Verbindungsbolzen vorgesehen, wobei grundsätzlich auch zwei oder mehrere Verbindungsbolzen eingesetzt werden können.

In vorteilhafter Weiterbildung der Erfindung kann der wenigstens eine Verbindungsbolzen mit einem Anschlagteller zusammenwirken, der sich an der unteren Wand der Aufnahme in der Feststellung des Lagers abstützt und der in der Lösestellung einen Leerweg zur unteren Wand aufweist. Dies ermöglicht mit geringem baulichen Aufwand eine definierte Begrenzung der Aggregatschwingungen in der Lösestellung des Lagers über den Anschlagteller.

Zur vollständigen Isolierung des Verbindungsbolzens gegenüber der Aufnahme bzw. der basisseitigen Konsole in der Lösestellung des Lagers kann der zusätzliche Dämpfungskörper mit einem angeformten Führungsabschnitt die untere Wand der Aufnahme durchdringen und an dem Anschlagteller anliegen.

Die Verstelleinrichtung kann beispielsweise eine Kniehebelmechanik oder ein Gestänge sein, das z. B. elektromagnetisch betätigbar ist und den Verbindungsbolzen entsprechend verstellt. Bevorzugt wird jedoch vorgeschlagen, dass der Verbindungsbolzen zur Herstellung der festen Verbindung ein Gewinde aufweist, auf das eine Feststellmutter aufgeschraubt ist und dass die Feststellmutter mittels der Verstelleinrichtung verdrehbar bzw. anziehbar und lösbar ist.

Dabei kann die Verstelleinrichtung fertigungstechnisch einfach eine formschlüssig an der Feststellmutter angreifende Spindel sein, die über ein Stellgetriebe und einen elektrischen Stellmotor antreibbar ist und dementsprechend die Feststellmutter anzieht oder begrenzt löst.

Insbesondere kann das Stellgetriebe ein selbsthemmendes Schneckengetriebe sein, dessen Schnecke von dem Elektromotor angetrieben ist. Dies bewirkt eine zuverlässige Selbsthemmung in der Feststellung oder Lösestellung des Lagers bei gleichzeitig niedrigen Verstellkräften.

Die Verstelleinrichtung kann dabei bevorzugt an der Aufnahme befestigt sein und somit unmittelbar bzw. baulich einfach an der Feststellmutter angreifen.

Schließlich kann die Verstelleinrichtung zumindest im Leerlaufbetrieb des Antriebsaggregates aktiviert sein und das Lager in die Lösestellung umschalten, d.h. dass der weichere Dämpfungskörper aktiviert ist und das Lager mit diesem sozusagen in Reihe geschalten ist. Der besagte Leerweg zwischen der Anschlagtasse und der unteren Wand der Aufnahme kann aber so eingestellt sein, dass bei größeren Amplituden bzw. Verlagerungen des Antriebsaggregates das Lager dennoch unterstützend zur Wirkung kommt.

Ein Ausführungsbeispiel der Erfindung ist im folgenden mit weiteren Einzelheiten näher erläutert.

Die schematische Zeichnung zeigt einen Querschnitt durch eine Vorrichtung zur schwingungsdämpfenden Lagerung eines Antriebsaggregates in einem Kraftfahrzeug, mit einer Verstelleinrichtung zum Wirksamschalten eines zusätzlichen Dämpfungskörpers.

In der Zeichnung ist mit 10 ein schwingungsdämpfendes Lager bezeichnet, das in seinem inneren Aufbau herkömmlicher Konstruktion sein kann.

Das Lager 10 weist einen Lagerkern 12 und ein Gehäuse 14 auf.

Der Lagerkern 12 ist über eine nicht dargestellte Verbindungseinrichtung (z.B. eine Gewindeverbindung) mit einer aggregateseitigen Stütze 16 fest verbunden.

Das Gehäuse 14 des Lagers 10 ist über einen Träger 18 und eine daran befestigte Konsole 20 aufbauseitig des Kraftfahrzeuges bzw. basisseitig fest abgestützt.

An der Konsole 20 ist dazu eine kastenförmige Aufnahme 22 befestigt, z.B. angeschweißt, die eine obere Wand 22a und eine untere Wand 22b aufweist.

Die zwischen den Wänden 22a, 22b gebildete Kammer 22c nimmt einen gegenüber der Kennung des Lagers 10 "weicheren" gummielastischen Dämpfungskörper 24 auf, der rotationssymmetrisch ausgeführt ist und der sich durch eine Ausnehmung 22d in der oberen Wand 22a nach oben erstreckt und sich dabei wie ersichtlich an der benachbarten Stirnseite des Gehäuses 14 des Lagers 10 abstützt.

Ferner weist der Dämpfungskörper 24 einen nach unten abragenden Führungsabschnitt 24a auf, der durch eine weitere Ausnehmung 22e in der unteren Wand 22b hindurch ragt.

An dem Gehäuse 14 an dessen Stirnseite ist ein Verbindungsbolzen 26 befestigt, der sich zentrisch durch den Dämpfungskörper 24 und wie ersichtlich durch die Wände 22a, 22b der Aufnahme 22 erstreckt.

Der Verbindungsbolzen 26 ist mit einem Außengewinde versehen, auf das unter Zwischenschaltung eines Anschlagtellers 28 eine Feststellmutter 30 aufgeschraubt ist.

Durch Anziehen der Feststellmutter 30 kann eine feste Verbindung (Feststellung) zwischen dem Lager 10 und der Aufnahme 22 bzw. der Konsole 20 hergestellt werden, wobei sich der Anschlagteller 28 an der unteren Wand 22b anlegt, während die Stirnseite des Gehäuses14 an die obere Wand 22a angepresst wird.

Der Dämpfungskörper 24 ist dabei so ausgelegt, dass er sich in die Kammer 22c unter entsprechender Vorspannung zurück verformen kann und diese dabei mehr oder weniger ausfüllt.

Durch Lösen der Feststellmutter 30 (Lösestellung) wird - wie auf der Zeichnung dargestellt - das Lager 10 von der oberen Wand 22a um das Maß a abgehoben, wodurch der in seiner Kennung weichere Dämpfungskörper 24 zur Wirkung kommt. Das Lager 10 ist somit mit dem Dämpfungskörper 24 quasi in Reihe geschalten.

Ferner hebt der Anschlagteller 28 um einen Leerweg s von der unteren Wand 22b der Aufnahme 22 ab, so dass keine metallische Berührung zwischen der Aufnahme 22 einerseits und dem Gehäuse 14 mit Verbindungsbolzen 26, Anschlagteller 28 und Feststellmutter 30 andererseits mehr vorliegt. Ggf. kann an dem Anschlagteller 28 noch eine im gleichen Außendurchmesser ausgeführte Dämpfungsscheibe (nicht dargestellt) zur unteren Wand 22b vorgesehen sein.

Zur Betätigung der Feststellmutter 30 ist eine Verstelleinrichtung 32 vorgesehen, die sich im wesentlichen aus einem Stellgetriebe 34 und einem elektrischen Stellmotor 36 zusammensetzt. Die Verstelleinrichtung 32 ist an der Aufnahme 22 in nicht dargestellter Weise befestigt, z.B. mittels einer Schraubverbindung.

Das Stellgetriebe 34 weist eine nach Art eines Steckschlüssels formschlüssig an der Feststellmutter 30 angreifende Spindel 34a auf, die über ein nicht dargestelltes, selbsthemmendes Schneckengetriebe verdrehbar ist. Der Stellmotor 36 wirkt dabei auf eine Schnecke des Stellgetriebes 34, die mit dem Schneckenrad auf der Spindel 34a in Eingriff ist.

Durch Ansteuerung des elektrischen Stellmotors 36 z.B. im Leerlaufbetrieb der Brennkraftmaschine des Kraftfahrzeuges bzw. des Antriebsaggregates wird über das Stellgetriebe 34 und die Spindel 34a die Feststellmutter 30 in die gezeichnete Lösestellung verstellt. Die weichere Kennung des Dämpfungskörpers 24 ist somit im Bereich des Leerweges s und des Abstandes a zwischen der oberen Wand 22a und der Stirnseite des Gehäuses 14 des Lagers 10 wirksam, wobei das Lager 10 dadurch mit dem Dämpfungskörper 24 in Reihe geschalten ist. Ferner wird auch eine gewisse kardanische Elastizität des Lagers 10 durch die gelöste Verbindung erreicht, woraus eine zusätzliche Steifigkeitsabsenkung in allen Raumrichtungen resultiert.

In Betriebszuständen des Antriebsaggregates außerhalb des Leerlaufzustandes wird über die Verstelleinrichtung 32 die feste Verbindung (Feststellung) des Lagers 10 mit der Aufnahme 22 und der Konsole 20 wieder hergestellt und dabei der Dämpfungskörper 24 kurzgeschlossen. Das Lager 10 ist somit wieder in Alleinstellung aktiviert und nur dessen Kennung maßgebend.

Die Erfindung ist nicht auf das dargestellte Ausführungsbeispiel beschränkt. So können die Aufnahme 22 und der zusätzliche Dämpfungskörper 24 auch an der oberen Verbindungsstelle bzw. zwischen der Stütze 16 und dem Lagerkern 12 des Lagers 10 vorgesehen sein.

Anstelle einer Gewindeverbindung 26, 30 kann auch eine andere Verstelleinrichtung mit einem Gestänge, einer Kniehebelmechanik oder einer Excenterverstellung vorgesehen sein, die an dem Verbindungsbolzen 26 durch Gelenke, etc. angreift und das Lager 10 in eine Feststellung oder eine Lösestellung wie vorbeschrieben umschaltet.

Ferner kann ggf. auch die obere Wand 22a der Aufnahme 22 entfallen und die Kammer 22c vollständig nach oben offen ausgeführt sein. Das Gehäuse 14 bzw. dessen entsprechende Stirnseite des Lagers 10 könnte sich dann in der Feststellung an der freien Stirnseite der Umfangswände der kastenförmigen Aufnahme 22 anlegen.

## Patentansprüche

1. Vorrichtung zur schwingungsdämpfenden Lagerung eines Antriebsaggregates, insbesondere in Kraftfahrzeugen, mit einer aggregateseitigen Stütze (16) und einer basisseitigen Konsole (20), zwischen denen ein in seinen Dämpfungseigenschaften umschaltbares Lager (10) angeordnet ist, dessen Lagerkern (12) mit der Stütze (16) und dessen Lagergehäuse (14) mit der Konsole (20) fest verbunden ist, wobei wenigstens ein mittels einer Verstelleinrichtung (32) betätigbarer Verbindungsbolzen (26) vorgesehen ist, mittels dem bei definierten Betriebszuständen des Antriebsaggregates unter Zwischenschaltung eines zusätzlichen, gummielastischen Dämpfungskörpers (24) die feste Verbindung zwischen dem Lagergehäuse (14) und der Konsole (20) gelöst wird, wobei der zusätzliche Dämpfungskörper (24) in einer Feststellung in einer Kammer (22c) einer Aufnahme (22) federnd vorgespannt aufgenommen und bei gelöster Verbindung wirksam ist, **dadurch gekennzeichnet, dass** der wenigstens eine Verbindungsbolzen (26) die Kammer (22c) durchdringt und an dem Gehäuse (14) des Lagers (10) befestigt ist und so mittels der am wenigstens einen Verbindungsbolzen (26) angreifenden Verstelleinrichtung (32) zusammenwirkt, dass sich das Gehäuse (14) in der Feststellung an einer dem Gehäuse (14) zugeordneten oberen Wand (22a) der Aufnahme (22) abstützt und in der Lösestellung aufgrund der Vorspannung des zusätzlichen Dämpfungskörpers (24) von der oberen Wand (22a) abhebt.

2. Vorrichtung nach Anspruch 1, **dadurch gekennzeichnet, dass** die Verstelleinrichtung (32) zwischen der basisseitigen Konsole (20) und dem Gehäuse (14) des schwingungsdämpfenden Lagers (10) vorgesehen ist.

3. Vorrichtung nach Anspruch 1 oder 2, **dadurch gekennzeichnet, dass** die Aufnahme (22) an der basisseitigen Konsole (20) befestigt ist und eine Kammer (22c) mit einer oberen Wand (22a) und einer unteren Wand (22b) aufweist, wobei in der Kammer (22c) der Dämpfungskörper (24) angeordnet ist und dass wenigstens ein Verbindungsbolzen (26) des Lagers (10) die beiden Wände (22a, 22b) durchdringt.

4. Vorrichtung nach Anspruch 3, **dadurch gekennzeichnet, dass** der wenigstens eine Verbindungsbolzen (26) mit einem Anschlagteller (28) zusammenwirkt, der sich an der unteren Wand (22b) der Aufnahme (22) in der Feststellung des Lagers (10) abstützt und der in der Lösestellung einen Leerweg s zur unteren Wand (22b) aufweist.

5. Vorrichtung nach Anspruch 3 oder 4, **dadurch gekennzeichnet, dass** der zusätzliche Dämpfungskörper (24) mit einem angeformten Führungsabschnitt (24a) die untere Wand (22b) der Aufnahme (22) durchdringt und an dem Anschlagteller (28) anliegt

6. Vorrichtung nach einem der vorhergehenden Ansprüche, **dadurch gekennzeichnet, dass** der Verbindungsbolzen (26) zur Herstellung der festen Verbindung ein Gewinde aufweist, auf das eine Feststellmutter (30) aufgeschraubt ist und dass die Feststellmutter (30) mittels der Verstelleinrichtung (32) verdrehbar ist.

7. Vorrichtung nach Anspruch 6, **dadurch gekennzeichnet, dass** die Verstelleinrichtung (32) eine formschlüssig an der Feststellmutter (30) angreifende Spindel (34a) ist, die über ein Stellgetriebe (34) und einen elektrischen Stellmotor (36) antreibbar ist.

8. Vorrichtung nach Anspruch 7, **dadurch gekennzeichnet, dass** das Stellgetriebe (34) ein selbsthemmendes Schneckengetriebe ist, dessen Schnecke von dem elektrischen Stellmotor (36) angetrieben ist.

9. Vorrichtung nach einem der vorhergehenden Ansprüche, **dadurch gekennzeichnet, dass** die Verstelleinrichtung (32) an der Aufnahme (22) befestigt ist.

10. Vorrichtung nach einem der vorhergehenden Ansprüche, **dadurch gekennzeichnet, dass** die Verstelleinrichtung (32) zumindest im Leerlaufbetrieb des Antriebsaggregates aktiviert ist und das Lager (10) in die Lösestellung umschaltet.

11. Vorrichtung nach einem der Ansprüche 1 bis 10, **dadurch gekennzeichnet, dass** die obere Wand durch die freie Stirnseite der Kammer (22c) der Aufnahme (22) gebildet ist.

## Claims

1. Device for vibration-damping mounting of a powertrain, in particular in motor vehicles, comprising a support (16) on the powertrain side and a bracket (20) on the frame side, between which is arranged a mount (10) with variable damping properties, the core (12) of which mount (10) is rigidly connected to the support (16) and the housing (14) of which mount (10) is rigidly connected to the bracket (20), at least one connecting pin (26) actuatable by means of an adjustment device (32) being provided, by means of which connecting pin (26) the rigid connection between the housing (14) and the bracket (20) is released under defined operating conditions of the powertrain, with interposition of an additional, rubber-elastic damping body (24), the additional damping body (24) being housed, in a fixed position, under resilient preload in a chamber (22c) of a receptacle (22) and being effective when the connection is released, **characterised in that** the at least one connecting pin (26) passes through the chamber (22c) and is fixed to the housing (14) of the mount (10) and cooperates by means of the adjustment device (32) engaging on the at least one connecting pin (26) in such a way that the housing (14) bears in the fixed position against an upper wall (22a), associated with the housing (14), of the receptacle (22), and in the released position lifts away from the upper wall (22a) as a result of the preload of the additional damping body (24).

2. Device according to Claim 1, **characterised in that** the adjustment device (32) is provided between the frame-mounted bracket (20) and the housing (14) of the vibration-damping mount (10).

3. Device according to Claim 1 or 2, **characterised in that** the receptacle (22) is fixed to the frame-mounted bracket (20) and has a chamber (22c) with an upper wall (22a) and a lower wall (22b), the damping body (24) being arranged in the chamber (22c), and **in that** at least one connecting pin (26) of the mount (10) passes through the two walls (22a, 22b).

4. Device according to Claim 3, **characterised in that** the at least one connecting pin (26) cooperates with a stop plate (28) which bears against the lower wall (22b) of the receptacle (22) in the fixed position of the mount (10) and has a clearance s from the lower wall (22b) in the released position.

5. Device according to Claim 3 or 4, **characterised in that** an integrally moulded guide portion (24a) of the additional damping body (24) passes through the lower wall (22b) of the receptacle (22) and rests against the stop plate (28).

6. Device according to any one of the preceding claims, **characterised in that,** in order to establish the rigid connection, the connecting pin (26) has a screw thread on to which a locking nut (30) is screwed, and **in that** the locking nut (30) can be turned by means of the adjustment device (32).

7. Device according to Claim 6, **characterised in that** the adjustment device (32) is a spindle (34a) which engages in a form-fitting manner on the locking nut (30) and is driveable via an actuating mechanism (34) and an electric servomotor (36).

8. Device according to Claim 7, **characterised in that** the actuating mechanism (34) is a self-locking worm gear drive, the worm of which is driven by the electric servomotor (36).

9. Device according to any one of the preceding claims, **characterised in that** the adjustment device (32) is fixed to the receptacle (22).

10. Device according to any one of the preceding claims, **characterised in that** the adjustment device (32) is activated at least in idling operation of the powertrain and switches the mount (10) to the released position.

11. Device according to any one of Claims 1 to 10, **characterised in that** the upper wall is formed by the free end face of the chamber (22c) of the receptacle (22).

## Revendications

1. Dispositif pour le montage antivibratoire d'un groupe d'entraînement, en particulier dans des véhicules automobiles, comprenant un support côté groupe (16) et une console côté base (20), entre lesquels est disposé un palier (10) dont les propriétés d'amortissement sont réversibles, dont le noyau de palier (12) est relié fixement au support (16) et le logement de palier (14) à la console (20), au moins un boulon d'assemblage (26) pouvant être actionné au moyen d'un dispositif de réglage (32) étant prévu, au moyen duquel dans des états de fonctionnement définis du groupe d'entraînement, en intercalant un corps d'amortissement (24) additionnel élastique, l'assemblage serré entre le logement de palier (14) et la console (20) est desserré, le corps d'amortissement additionnel (24) étant logé dans une position serrée dans une chambre (22c) d'un logement (22) en étant précontraint par un ressort et étant actif lorsque l'assemblage est desserré, **caractérisé en ce que** le au moins un boulon d'assemblage (26) traverse la chambre (22c) et est fixé sur le boîtier (14) du palier (10) et coopère ainsi au moyen du dispositif de réglage (32) appliqué sur le au moins un boulon d'assemblage (26) de sorte que le boîtier (14) s'appuie dans la position serrée sur une paroi supérieure (22a) du logement (22) associée au boîtier (14) et dans la position desserrée, en raison de la précontrainte du corps d'amortissement (24) additionnel, se soulève de la paroi supérieure (22a).

2. Dispositif selon la revendication 1, **caractérisé en ce que** le dispositif de réglage (32) est prévu entre la console côté base (20) et le boîtier (14) du palier antivibratoire (10).

3. Dispositif selon la revendication 1 ou 2, **caractérisé en ce que** le logement (22) est fixé sur la console côté base (20) et comprend une chambre (22c) dotée d'une paroi supérieure (22a) et d'une paroi inférieure (22b), le corps d'amortissement (24) étant disposé dans la chambre (22c) et **en ce qu'**au moins un boulon d'assemblage (26) du palier (10) traverse les deux parois (22a, 22b).

4. Dispositif selon la revendication 3, **caractérisé en ce que** le au moins un boulon d'assemblage (26) coopère avec une rondelle de butée (28) qui s'appuie sur la paroi inférieure (22b) du logement (22) dans la position serrée du palier (10) et qui comprend dans la position desserrée un passage à vide s en direction de la paroi inférieure (22b).

5. Dispositif selon la revendication 3 ou 4, **caractérisé en ce que** le corps d'amortissement (24) additionnel comprenant une section de guidage (24a) intégrée traverse la paroi inférieure (22b) du logement (22) et est adjacent à la rondelle de butée (28).

6. Dispositif selon l'une quelconque des revendications précédentes, **caractérisé en ce que** le boulon d'assemblage (26) destiné à établir l'assemblage serré comprend un filet sur lequel est vissé un écrou de blocage (30) et **en ce que** l'écrou de blocage (30) peut être tourné au moyen du dispositif de réglage (32).

7. Dispositif selon la revendication 6, **caractérisé en ce que** le dispositif de réglage (32) est une broche (34a) agissant par coopération de formes sur l'écrou de blocage (30), laquelle broche peut être entraînée par une servotransmission (34) et un servomoteur électrique (36).

8. Dispositif selon la revendication 7, **caractérisé en ce que** la servotransmission (34) est une transmission à vis sans fin à blocage automatique dont la vis sans fin est entraînée par le servomoteur électrique (36).

9. Dispositif selon l'une quelconque des revendications précédentes, **caractérisé en ce que** le dispositif de réglage (32) est fixé sur le logement (22).

10. Dispositif selon l'une quelconque des revendications précédentes, **caractérisé en ce que** le dispositif de réglage (32) est activé au moins au cours d'un fonctionnement à vide du groupe d'entraînement et fait passer le palier (10) dans la position desserrée.

11. Dispositif selon l'une quelconque des revendications 1 à 10, **caractérisé en ce que** la paroi supérieure est formée par la face frontale libre de la chambre (22c) du logement (22).
